Europäisches Patentamt

European Patent Office

Office européen des brevets

(19)

(11) EP 1 598 375 A1

(12) EUROPEAN PATENT APPLICATION
published in accordance with Art. 158(3) EPC

(43) Date of publication:
23.11.2005 Bulletin 2005/47

(51) Int Cl.7: C08F 6/10

(21) Application number: 04714484.5

(22) Date of filing: 25.02.2004

(86) International application number:
PCT/JP2004/002240

(87) International publication number:
WO 2004/083262 (30.09.2004 Gazette 2004/40)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 28.02.2003 JP 2003054462
21.10.2003 JP 2003361288

(71) Applicant: TOAGOSEI CO., LTD.
Tokyo 105-8419 (JP)

(72) Inventors:
• MATSUSHIMA, Yoshiaki
c/o Corporate Research Labora
Nagoya-shi, Aichi 455-0027 (JP)

• MORITA, Masatoshi
c/o Nagoya Factory Toagosei Co.,
Nagoya-shi, Aichi 455-0026 (JP)
• AIMIYA, Ryouichi c/o Nihon Junyaku Co., Ltd.
Tokyo 103-021 (JP)
• GOTOU, Toyofumi
c/o Corporate Research Laboratory
Nagoya-shi, Aichi 455-0027 (JP)
• FUKAYA, Hideki
c/o Corporate Research Laboratory
Nagoya-shi, Aichi 455-0027 (JP)

(74) Representative: Leson, Thomas Johannes Alois
Tiedtke-Bühling-Kinne & Partner GbR,
TBK-Patent,
Bavariaring 4-6
80336 München (DE)

(54) METHOD OF PURIFYING POWDERY RESIN

(57) An object of the present invention is to provide a method for purifying a powdered resin by efficiently removing the residue of an organic solvent used as a polymerization solvent from a powdered resin obtained by precipitation polymerization. The method for purifying a powdered resin of the present invention comprises steps of (A) bringing a gas comprising polar solvent vapor (water vapor, ethanol vapor, 1-propanol vapor or the like) into contact with a powdered resin obtained by precipitation polymerization of a hydrophilic monomer (acrylic acid or the like) in an organic solvent (cyclohexane or the like) that can dissolve the hydrophilic monomer and cannot dissolve a polymer composed of the hydrophilic monomer; and (B) heating the powdered resin. This method makes it possible to efficiently extract and remove the residual organic solvent while maintaining the powder form unchanged.

Figure.2

(a)

(b)

**Description**

Technical Field

The present invention relates to a method for purifying a powdered resin by efficiently removing a residue of an organic solvent used as a polymerization solvent from a powdered resin obtained by precipitation polymerization.

Background Art

In conventional practice, operations for removing a residual unreacted monomer, an organic solvent as a polymerization solvent, and the like have been used to isolate a resin manufactured by various polymerization methods from a polymerization solution.

It is extremely difficult to isolate a solid resin in a state free of impurities, and various experiments have been conducted to minimize the residual unreacted monomer, the organic solvent as a polymerization solvent, and the like and the following methods have been disclosed.

Vacuum drying and other methods are commonly used as methods for removing an organic solvent as a polymerization solvent, however, these are insufficient. Another example is a method wherein a heated inert gas is brought into contact with a polyvinyl alcohol obtained by usual methods, and a flowing heated gas containing water vapor is then brought into contact with the polyvinyl alcohol (see JP-A S48-52,890). In addition, an example of a method for removing an unreacted monomer and a volatile substance such as an organic solvent as a polymerization solvent is a method wherein flowing water vapor, an inert gas, and a mixed fluid containing an arbitrary amount of water are brought into contact with pellets of a thermoplastic polymer (olefin-based polymer) at a temperature equal to or lower than the cohesion temperature of the pellets (see JP-A H01-22,930).

On the other hand, methods for removing an unreacted monomer include a method wherein a flowing gas containing water vapor is brought into contact in the range from 80 to 250°C with a hydrated-gel polymer obtained by aqueous solution polymerization, and the polymer is then dried (see JP-A S64-26,614), a method wherein air or an inert gas having an absolute humidity of 0.05 to 2.0 kg water vapor/kg dry air is brought into contact with a polymer obtained by emulsion polymerization or suspension polymerization of an acrylic acid ester and/or a methacrylic acid ester (see JP-A H06-157641), and the like.

Disclosure of the Invention

However, the methods based on the prior art are insufficient for removing a residual organic solvent from a powdered resin, and a method for simply and efficiently purifying the resin is required.

Due to these circumstances, an object of the present invention is to provide a method for purifying a powdered resin by efficiently removing a residue of an organic solvent used as a polymerization solvent from a powdered resin obtained by precipitation polymerization.

The present invention is described as follows.

1. A method for purifying a powdered resin, comprising: step (A) of bringing a gas comprising polar solvent vapor into contact with a powdered resin obtained by precipitation polymerization of a hydrophilic monomer in an organic solvent that can dissolve said hydrophilic monomer and cannot dissolve a polymer composed of said hydrophilic monomer; and step (B) of heating said powdered resin.

2. The method for purifying a powdered resin according to 1 above, wherein said organic solvent remaining in said powdered resin is extracted, and is removed along with said gas.

3. The method for purifying a powdered resin according to 1 above, wherein said polar solvent vapor is obtained by gasifying 0.1 to 600mg of said polar solvent per 1 g of said powdered resin to be treated.

4. The method for purifying a powdered resin according to 1 above, wherein said polar solvent is a solvent having a solubility parameter $\delta$ of 15MPa$^{1/2}$ or more.

5. The method for purifying a powdered resin according to 1 above, wherein contact time of said gas with said powdered resin in said step (A) is 0.1 hour or more.

6. The method for purifying a powdered resin according to 1 above, wherein heating temperature in said step (B) is in the range from 50 to 200°C.

7. The method for purifying a powdered resin according to 6 above, wherein said heating temperature in said step (B) is the temperature in the range from $TG_X$ to $TG_O$ that are specific to said powdered resin, wherein said $TG_X$ is 50°C or higher and is a temperature that corresponds to the inflection point of the endothermic peak displayed by said powdered resin brought into contact with said gas in a differential scanning calorimetric analysis, and wherein said $TG_O$ is 200°C or lower and is glass transition temperature of said powdered resin.

8. The method for purifying a powdered resin according to 1 above, wherein heating temperature in said step (B) is a temperature equal to or higher than the boiling point of said polar solvent.

9. The method for purifying a powdered resin according to 1 above, wherein said step (A) and/or said step (B) are performed at a pressure of 10MPa or lower.

10. The method for purifying a powdered resin according to 1 above, wherein said gas comprises an inert gas, and said inert gas is selected from the group consisting of carbon dioxide, nitrogen, air, helium, neon and argon.

11. The method for purifying a powdered resin according to 1 above, wherein said powdered resin is a (co)polymer in which acrylic acid is a constituent monomer.

## DETAILED DESCRIPTION OF THE INVENTION

The present invention is described in further detail hereinbelow, in order of a hydrophilic monomer and an organic solvent that are used to obtain a powdered resin, and a powdered resin and a method for purifying the resin.

## 1. Hydrophilic Monomer

The hydrophilic monomer that can be applied to the present invention is not limited in terms of its type as long as a powdered resin can be obtained by precipitation polymerization.

The hydrophilic monomer includes a vinyl monomer having a polymerizable unsaturated group, such as an olefin-based unsaturated carboxylic acid and salt thereof, an olefin-based unsaturated phosphoric acid and salt thereof, an olefin-based unsaturated carboxylic acid ester, an olefin-based unsaturated sulfonic acid and salt thereof, an olefin-based unsaturated amine, an olefin-based unsaturated ammonium salt, an olefin-based amide and the like.

Examples of the olefin-based unsaturated carboxylic acid and salt thereof include (meth)acrylic acid, maleic acid, fumaric acid, alkali salts thereof and the like.

Examples of the olefin-based unsaturated phosphoric acid and salt thereof include a (meth)acryloyl (poly) oxyethylene phosphoric acid ester, alkali salt thereof and the like.

Examples of the olefin-based unsaturated carboxylic acid ester include a (meth)acrylic acid alkyl ester such as methyl (meth)acrylate, ethyl (meth)acrylate, butyl (meth)acrylate, isobutyl (meth)acrylate and octyl (meth)acrylate; a (meth)acrylic acid ester having ether bond such as 2-methoxyethyl (meth)acrylate, 2-ethoxyethyl (meth)acrylate; 2-hydroxyethyl (meth)acrylate, 2-hydroxypropyl (meth)acrylate, glycidyl (meth)acrylate and the like.

Examples of the olefin-based unsaturated sulfonic acid and salt thereof include (meth)acrylamide methyl propane sulfonic acid, allylsulfonic acid, alkali salts thereof and the like.

Examples of the olefin-based unsaturated amine include dimethyl aminoethyl (meth)acrylate, diethyl aminoethyl (meth)acrylate and the like.

Examples of the olefin-based unsaturated ammonium salt include (meth)acryloyl oxyethylene trimethylammonium halogen salt and the like.

Examples of the olefin-based unsaturated amide include (meth)acrylamide, methyl (meth)acrylamide, ethyl (meth)acrylamide, propyl (meth)acrylamide, vinyl methyl acetamide and the like.

The monomers cited above can be used singly or in combinations of two or more. Also, examples of the alkali salt include an alkali metal salt, an alkaline-earth metal salt, an ammonium salt and the like.

Other monomers may be also used as long as these monomers are copolymerizable with the monomers cited above. Examples include vinyl acetate, tetraallyl oxyethane, allyl pentaerythritol, allyl saccharose, allyl (meth)acrylate, trimethylolpropane diallyl ether, diallyl phthalate, ethylene glycol di(meth)acrylate, polyethylene glycol di(meth)acrylate, methoxypolyethylene glycol (meth)acrylate, phenoxypolyethylene glycol (meth)acrylate and the like. These can be used singly or in combinations of two or more.

Acrylic acid is the preferred hydrophilic monomer in the present invention. In a (co)polymer in which acrylic acid is a constituent monomer, the content ratio of the acrylic acid in relation to the entire monomer content is preferably 70 to 100% by mass, more preferably 80 to 100% by mass and further preferably 90 to 100% by mass.

## 2. Organic Solvent

The organic solvent used in precipitation polymerization is one can dissolve a hydrophilic monomer and cannot dissolve a polymer composed of the hydrophilic monomer.

Specific examples of the organic solvent include an alicyclic hydrocarbon such as cyclohexane and cyclooctane; an aromatic hydrocarbon such as benzene and toluene; a chain saturated hydrocarbon such as pentane, n-hexane, isohexane, 3-methyl pentane, 2,3-dimethyl butane, n-heptane, 3-methyl hexane, 3-ethyl pentane, 2,2-dimethyl pentane, 2,3-dimethyl pentane, 2,4-dimethyl pentane, 3,3-dimethyl pentane and 2,2,3-trimethyl butane; a hydrophobic organic solvent such as trichloroethane and carbon tetrachloride; a ketone having a boiling point of 100°C or lower such as acetone and methyl ethyl ketone. Among these, cyclohexane is preferred.

3. Method for Manufacturing Powdered Resin

The hydrophilic monomer is polymerized (subjected to precipitation polymerization) in a polymerization solvent in the presence of a surfactant to prepare a suspension containing a powdered resin. Then, the suspension is filtrated and the organic solvent is distilled out and the like to isolate the powdered resin.

The powdered resin normally has a bulk density in the range from 0.05 to 0.5 $g/cm^3$. The reason why the powdered resin has a low bulk density is that microparticles aggregate and form a powder when the resin is precipitated by precipitation polymerization. Therefore, the powdered resin to be purified in the present invention is one wherein an organic solvent used as a polymerization solvent is admixed into the powdered resin when the microparticles precipitate or aggregate.

As described above, the organic solvent remaining in the powdered resin due to precipitation polymerization cannot be removed by conventional purifying methods, but can be removed for the first time according to the purifying method of the present invention.

The shape of the powdered resin is not particularly limited, and may be spherical, square, aciculate, rectangular, irregular, or the like. The size of the powdered resin is also not particularly limited, and the average diameter (or maximum length) of a primary particle is normally in the range from 50 to 200nm.

4. Method for Purifying Powdered Resin

The purifying method of the present invention comprises step (A) of bringing a gas comprising polar solvent vapor into contact with the powdered resin, and step (B) of heating the powdered resin.

4-1. Step (A) [Contacting the powdered resin and gas]

The gas brought into contact with the powdered resin contains polar solvent vapor, and in the present invention, the gas which is not reactive with the powdered resin is used.

The preferable polar solvent is one having a solubility parameter $\delta$ of $15MPa^{1/2}$ or more, particularly $20MPa^{1/2}$ or more and includes water (47.9), alcohol, ketone, ester and the like. The numerical value inside the parentheses indicates the solubility parameter $\delta$ (unit of measurement: $MPa^{1/2}$) according to the "New Edition Solvent Pocketbook" (compiled by the Society of Organic Synthetic Chemistry, Japan, published in 1994 by Ohmsha). The same applies hereinbelow.

Examples of the alcohol include a monohydric lower alcohol such as methanol (29.7), ethanol (26.0), 1-propanol (24.3), 2-propanol (23.6), 1-butanol (23.3) and t-butanol (21.5); a dihydric alcohol such as ethylene glycol (29.9), diethylene glycol (24.8) and propylene glycol (25.8); a trihydric alcohol such as glycerol (33.8) and trimethylol propane; a tetrahydric alcohol such as diglycerol, triglycerol and polyglycerol; and the like.

Examples of the ketone include acetone (19.9), methyl ethyl ketone (18.5), methyl butyl ketone (20.3) and the like.

In addition, examples of the ester include ethyl acetate (18.5), propyl acetate (17.8), butyl acetate (17.0) and the like.

Ethanol and 1-propanol are preferred among the polar solvents. Also, the polar solvents can be used singly or in combinations of two or more.

The polar solvent is expected to have azeotropic effects with the organic solvent that is to be removed.

Water vapor alone may be used as the gas. Vapor of an organic polar solvent alone may also be used. Furthermore, the water vapor and vapor of the organic polar solvent may be used together. In this case, the mixture ratio between the water vapor and the vapor of the organic polar solvent is not particularly limited. The water vapor and the vapor of the organic polar solvent may be introduced separately, or they may be introduced after being mixed together in advance.

When the gas is brought into contact with the powdered resin, a polar solvent vapor and an inert gas can be used in combination for the purpose of adjusting concentration of the polar solvent vapor in the gas.

Examples of the inert gas include carbon dioxide, nitrogen, air, helium, neon, argon and the like. Among these, carbon dioxide, nitrogen and air are preferred. In addition, these gases may be used singly or in combinations of two or more.

Thus, when a polar solvent vapor and an inert gas are used in combination, the gases may be introduced separately into the container in which the powdered resin is mounted, or the gases may be introduced after being mixed in advance.

When the gas and the powdered resin are brought into contact with each other, the contact can be brought dynamically by flowing, circulating the gas and the like, or statically in a sealed environment. The contact may also be brought batchwise or continuously.

Methods for bringing the gas into contact with the powdered resin include (1) a method of bringing the gas into contact with the powdered resin while the resin is kept at rest, (2) a method of bringing the gas into contact with the powdered resin while the resin is moving, and the like.

Particularly, embodiments of (2) include (i) a method of introducing the powdered resin into a container filled with the gas, (ii) a method of introducing the gas while moving the powdered resin in a container, (iii) a method of simultaneously or alternately introducing the powdered resin and the gas into an empty container, and the like. In addition, (i), (ii), (iii) and the like may be changed to a different method while each of these methods is being performed.

Specific examples of method (i) include a method of introducing the powdered resin by spraying or the like into a container filled with the gas in a specific concentration (for example, a method of introducing the powdered resin by spraying from above, as necessary with an inert gas or the like, into a vertically extended container filled with the gas in a certain concentration), a method of purifying the powdered resin by placing the resin on a moving belt conveyor or the like in a container filled with the gas in a specific concentration (for example, a method of introducing the powdered resin by spreading the resin thinly on a belt conveyor in a horizontally extended container filled with the gas in a certain concentration), and the like.

Additionally, specific examples of method (ii) include a method of blowing the gas or solely the inert gas constituting the gas onto the powdered resin mounted in a container, keeping the powdered resin in a fluid state in the container and introducing further the gas, and the like.

In methods (i), (ii), (iii) and the like, it is possible to combine methods of stirring the powdered resin, keeping the gas in a steadily fluid state, or the like when the powdered resin and the gas are kept in contact with each other.

In the case using the vapor of the polar solvent, a preformed vapor of the polar solvent may be used, or vapor where the polar solvent in mist was introduced into a container to gasify the solvent simultaneously with the introduction may be used. Furthermore, vapor where the polar solvent designed to obtain a vaporized polar solvent is added to the container prior to heating and heated may be used. In any of these cases, the polar solvent in liquid form and the powdered resin must not come in contact prior to gasification.

In addition, when water vapor is solely used, when vapor of an organic polar solvent is solely used, and when both water vapor and vapor of an organic polar solvent are used as the polar solvent vapor, it is preferable that a vapor in which from 0.1 to 600mg of them is gasified is used for a treatment of 1g of the powdered resin. It is more preferable that 0.5 to 500mg be gasified, and even more preferable that 1 to 300mg be gasified. If the amount of the polar solvent vapor used in the contact with the powdered resin is too much, a satisfactory powdered state cannot be maintained. Also, a gelation sometimes occurs if the resin is a (co)polymer in which acrylic acid is a constitutional monomer.

The contact time in the step (A) can be selected according to the type or the like of the organic solvent and the powdered resin, but is normally 0.1 hour or more, preferably 0.1 to 20 hours, more preferably 0.5 to 15 hours, even more preferably 0.5 to 10 hours, and particularly 0.5 to 5 hours. If the contact time is too short, purification may be insufficient as a result. If the contact time is too long, the adequate powder characteristics of the powdered resin may be compromised.

The step (A) is preferably performed at a pressure of 10MPa or lower, and may be performed under atmospheric pressure, under increased pressure, or even in vacuum. It is more preferably performed from atmospheric pressure to 1MPa, and further preferably from atmospheric pressure to 0.5MPa.

The contact in the step (A) may take place at any time, providing it is after the polymerization solvent is separated from the suspension obtained by precipitation polymerization and the polymer is formed into a powder. Condensation occurs when the contact is performed in a slurry state.

4-2. Step (B) [Heating the powdered resin]

Since the organic solvent used as the polymerization solvent has a characteristic vapor pressure at room temperature, it has the tendency to evaporate if it is placed in an open system at room temperature and under atmospheric pressure. However, since the organic solvent to be removed in the invention is present in the powdered resin, either little of the organic solvent evaporates if the unpurified powdered resin is left at room temperature, or the rate of evaporation remains extremely low. In the step (A) of the present invention, after the powdered resin and the gas are brought into contact with each other and evaporation of the organic solvent in the powdered resin is facilitated, the powdered resin is heated.

The step (B) is normally performed inside a heat-resistant container or the like.

The heating temperature for the powdered resin is appropriately selected with consideration for glass transition temperature, melting point, decomposition temperature and the like of the powdered resin, and is preferably in the range from 50 to 200°C, more preferably from 60 to 180°C, further preferably from 70 to 170°C and particularly from 70 to 150°C. If the heating temperature is too high, the powdered resin may aggregate after the following treatment.

In addition, heating temperature of the powdered resin is preferably selected under considerations for temperatures $TG_X$ and $TG_O$ specific to the powdered resin, from a temperature range wherein these temperatures are set as lower and upper limits of the range.

The temperature $TG_X$ is 50°C or higher and is a temperature that corresponds to the inflection point of the endothermic peak displayed by the powdered resin in contact with the gas in a differential scanning calorimetric analysis. Further, the temperature $TG_O$ is 200°C or lower and is the glass transition temperature of the powdered resin.

The temperature $TG_X$ tends to decrease with increased consumption of the gas that contains polar solvent vapor and in contact with the powdered resin, and the approximate value (unit of measurement: K) is calculated by FOX's equation below. The plasticizer in the equation below has no restrictions as long as it has plasticizing action on the powdered resin; therefore, the unreacted monomer remaining in the powdered resin, for example, can also be regarded as a plasticizer in the present invention.

$$\text{(FOX's equation)} \quad 1/TG_X = W_p/TG_O + W_d/TG_d$$

$W_p$: polymer mass ratio
$W_d$: plasticizer mass ratio
$TG_O$: glass transition temperature of powdered resin
$TG_d$: glass transition temperature of plasticizer

Table 1 shows glass transition temperatures $TG_X$ by differential scanning calorimetric analysis on four types of powdered resins containing different plasticizer contents (residual unreacted monomer and residual 1-propanol). The analysis conditions are as follows.

Mass of measurement specimen: 10mg
Measured temperature range: from 30 to 160°C
Rate of temperature increase: 10°C/min

Table 1

| Specimen number | Residual component concentration (ppm) | | | Glass transition temperature (°C) |
|---|---|---|---|---|
| | cyclohexane | acrylic acid | 1-propanol | |
| 1 | 8,980 | 12,800 | 0 | 100.0 |
| 2 | 1,950 | 8,140 | 12,210 | 91.3 |
| 3 | 1,170 | 6,950 | 7,770 | 89.6 |
| 4 | 1,020 | 2,790 | 1,020 | 107.8 |

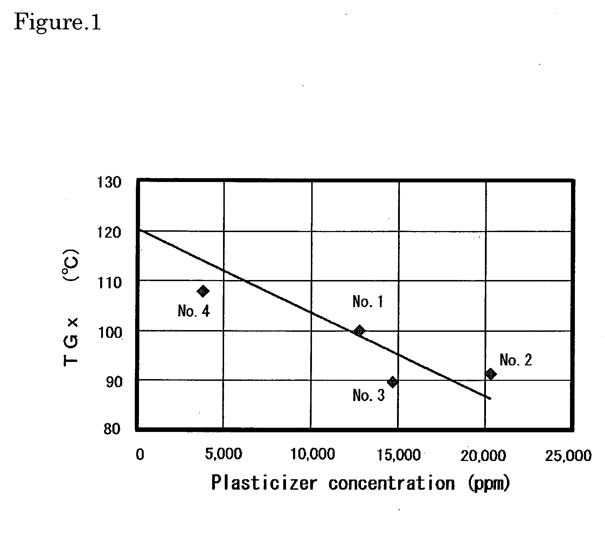

Based on the results in Table 1, Fig. 1 shows a relationship between the total concentration (plasticizer concentration) of the residual unreacted monomer (acrylic acid) and residual 1-propanol, and the temperature $TG_X$ obtained by differential scanning calorimetric analysis. In Fig. 1, "No. 1" indicated the temperature $TG_X$ of specimen No. 1. The same applies elsewhere. It is clear from Fig. 1 that $TG_X$ tends to shift to lower temperatures as the plasticizer concentration increases.

Another preferred aspect is that the heating temperature of the powdered resin is equal to or higher than the boiling point of the polar solvent.

The heating temperature of the powdered resin is appropriately selected according to the extent of purification or the amount of the powdered resin to be treated, but is normally in the range from 0.5 to 10 hours.

The method for heating the powdered resin is not particularly limited, and a heat source may be installed in the container, or the container may be heated from the outside.

Also, the step (B) is preferably performed at a pressure of 10MPa or lower, and may be performed under atmospheric pressure, under increased pressure, or even in vacuum. It is more preferably performed from atmospheric pressure to 1MPa, and further preferably from atmospheric pressure to 0.5MPa.

As described above, when pressurizing or heating is applied, the contact between the powdered resin and the gas is preferably performed in a sealed environment.

The atmosphere in the step (B) is not particularly limited, but after the step (A) is complete, heating may continue in the same atmosphere, or heating may be restarted after polar solvent vapor is introduced.

The organic solvent remaining in the powdered resin is extracted by heating the powdered resin at the above preferred temperature and the like.

When the organic solvent is extracted, a gasified material of the organic solvent and the gas are discharged, and the purified powdered resin remains in the container.

The containers for performing the steps (A) and (B) may be either the same or different. If the steps (A) and (B) are performed in the same container, either the step (B) may be performed after the step (A) is first performed, or the two steps may be performed simultaneously. The step (A) may be performed under heating to simultaneously perform steps (A) and (B).

If the steps (A) and (B) are performed in different containers, the container for the step (B) is placed after the container for the step (A). For example, the powdered resin can be moved from the container in the step (A) to the container in the step (B) by a belt conveyor.

In particular, a simultaneously performing method of step (A) as a method for keeping the gas in contact while the powdered resin is being moved and step (B) is an efficient purifying method, and this method is described below.

4-3. Method of simultaneously performing steps (A) and (B)

Examples of the method for simultaneously performing steps (A) and (B) as described above include methods of using a Lodige mixer, a conical ribbon mixer, or another such ribbon-blade rotary dryer; a rotary evaporator; or the like. These apparatuses can bring the powdered resin in the containers into contact with the gas containing polar solvent vapor under heat while moving the resin by stirring. In this case, the gas may already fill the container, or may be continuously or intermittently introduced into the container from the outside. If the gas is introduced from the outside, it is more preferable to introduce the gas by blowing it onto the powdered resin moving within the container than to introduce the gas in order to fill up the container.

Among the gas introduced, an amount to be introduced in the case using vapor of the polar solvent to treat 1g of powdered resin is preferably in the range from 0.001 to 30mg per minute, more preferably from 0.005 to 20mg per minute and further preferably from 0.01 to 10mg per minute. If the polar solvent is introduced within this range, a removal rate of the organic solvent tends to increase.

In addition, the heating temperature in this case is not particularly limited, but is preferably in the range from 50 to 200°C, more preferably from 60 to 180°C, further preferably from 70 to 170°C and particularly from 70 to 150°C. If the heating temperature is too high, the powdered resin may aggregate following treatment.

Further, another preferred aspect is that the heating temperature of the powdered resin is equal to or higher than the boiling point of the polar solvent.

The method for heating the powdered resin is not particularly limited, and a heat source may be installed in the container, or the container may be heated from the outside.

Regarding a condition for extracting the organic solvent from the powdered resin, a pressure in the container may be varied. Specifically, the pressure may be under atmospheric pressure, under increased pressure or even in vacuum. The pressure is preferably 10MPa or lower, more preferably from atmospheric pressure to 1MPa, and further preferably from atmospheric pressure to 0.5MPa.

The time for extracting the organic solvent is selected depending on the type of the organic solvent and the powdered resin, the heating temperature and the like, but is normally in the range from 0.1 to 20 hours, preferably from 0.5 to 15 hours, more preferably from 0.5 to 10 hours, and particularly from 0.5 to 5 hours. If the extraction time is too long, the adequate powder characteristics of the powdered resin may be compromised.

If the steps (A) and (B) are performed simultaneously using such an apparatus and the organic solvent is extracted, a gasified organic solvent and the gas are discharged and a purified powdered resin remains in the container.

5. Post process

The powdered resin treated in the steps (A) and (B) as described above may further be subjected to a heating treatment in vacuum under unaltered conditions as necessary. Heating temperature and heating time in this case are appropriately selected based on the conditions in the step (B). This method based on vacuum heating is suitable for cases in which alcohol vapor or another type of organic polar solvent vapor is used, and not only can the organic solvent remaining in the powdered resin be further reduced, but the amount of polar organic solvent residue can also be significantly reduced.

The purification mechanism in the present invention is assumed to be as follows. Specifically, it is a mechanism wherein the organic solvent present in or between powder microparticles is easily released by localized softening or localized melting in the powder surface induced by vapor of the polar solvent, or a deformation resulting therefrom.

The powdered resin ultimately purified by the above methods has antistatic properties, and is therefore easily handled without adhering to the inner wall of the container. Furthermore, since there is less residue of the organic solvent, less water is repelled by the powder surface, that is, hydrophilicity is improved.

Brief Description of the Drawings

Fig. 1 is a graph showing relationships between differential scanning calorimetry results ($TG_X$) and plasticizer concentrations of four types of powdered resins having different plasticizer contents.
Fig. 2 is an external view of the drum mixer used in Experiment 6, wherein Fig. 2A is a front view and Fig. 2B is a side view.
Fig. 3 is an external view of a drum constituting the drum mixer used in Experiment 6.
Fig. 4 is an explanatory diagram showing the interior of the drum constituting the drum mixer used in Experiment 6.
Fig. 5 is a graph showing the DSC curve of the powdered resin purified in Experiment 7.

Explanations of Letters or Numerals

1; drum, 2; bonnet of drum, 3; vane for stirring, 4; bonnet of screw-type drum, 5; presser of vane.

Best Mode for Carrying out the Invention

Examples will now be given to describe the present invention in further detail.
In the present example, an acrylate-based resin obtained by the following method is used as the powdered resin. When this resin is placed into a general-purpose reagent bottle, part of the resin adheres to the inner wall of the bottle due to static electricity.

1. Manufacturing and purifying acrylate-based resin (1)

1-1. Method for manufacturing acrylate-based resin

550 parts by mass of acrylic acid, 2,680 parts by mass of cyclohexane, 0.83 part by mass of a nonionic surfactant and 3.4 parts by mass of a cross-linking agent were placed into a reaction container, a polymerization initiator was added to perform polymerization, and a suspension containing a powdered resin was obtained. This was filtered out and heated in vacuum at 100 to 120°C for 10 hours.

1-2. Purification of powdered resin (I)

First, the amount of cyclohexane incorporated into the acrylate-based resin specimen was measured by gas chromatography (GC) and was found to be 3,870ppm. The following experiments were conducted using this specimen.

Experiment 1-1

An apparatus comprising a supercritical fluid extraction device equipped with a 50mL stainless steel container and a GC for analyzing an amount of cyclohexane extracted was used. A 1g specimen was placed in the container, and 50μL of distilled water (equivalent to 50mg water/1g specimen) was deposited on the inner wall of the container. After that, the interior of the container was replaced with carbon dioxide gas and the container was sealed. The interior of the container was then pressurized at 98kg/cm$^2$ (9.6MPa), and the container was subsequently heated to 70°C and kept at this temperature for 3 hours.
After the process had been completed, the powdered resin remaining in the container was used as a measurement specimen, and cyclohexane was quantitatively analyzed by GC. The specimen was taken out of the container and the appearance of the powder was visually observed. Furthermore, whether or not the resin in the reagent bottle had adhered to the inner wall of the bottle was observed, and the degree of electric charge was examined.
The results are shown in Table 2.

Experiment 1-2

The resin was purified in the same manner as Experiment 1-1 above, except using isopropyl alcohol instead of distilled water.

Experiment 1-3

The resin was purified in the same manner as Experiment 1-1 above, except using ethyl acetate instead of distilled water.

The above results are included in Table 2.

Table 2

| | Cyclohexane (ppm) | Removal rate (%) | Appearance | Adhesion to inner wall of bottle |
|---|---|---|---|---|
| Before experiments | 3,870 | - | Fine powder | yes |
| Experiment 1-1 | 283 | 92.7 | (Fine) powder | no |
| Experiment 1-2 | 2,600 | 32.8 | Fine powder | yes |
| Experiment 1-3 | 3,100 | 19.9 | Fine powder | yes |

In Table 2, Experiment 1-2 and Experiment 1-3 are examples using an organic polar solvent, but the removal ratios were limited to reductions of 32.8% and 19.9%, respectively. In Experiment 1-1, the cyclohexane content was reduced to 283ppm, that is, more than 90% (92.7%) was removed, and the powder changed little in appearance. The treated resin powder was observed by an electron microscope and the primary particles were confirmed to have a particle diameter of about 100nm prior to treatment, but the particles after treating appeared to have aggregated in clusters of several particles or have swelled under the action of water vapor. Also, there was no adhesion whatsoever in the reagent bottle.

1-3. Purification of powdered resin (II)

Next, the powdered resin that had been filtered out from the suspension was air-dried for 24 hours at room temperature (25°C) in an atmosphere with a relative humidity of 50%. The cyclohexane content of the air-dried specimen was 10,600ppm as measured by GC.

Experiment 1-4

The resin was purified in the same manner as Experiment 1-1 above, except using the air-dried specimen and pressurizing the interior of the container at 60kg/cm$^2$ (5.9MPa).

Experiment 1-5

The resin was purified in the same manner as Experiment 1-4 above, except pressurizing the interior of the container at 40kg/cm$^2$ (3.9MPa).

Experiment 1-6

The resin was purified in the same manner as Experiment 1-4 above, except pressurizing the interior of the container at 20kg/cm$^2$ (1.9MPa).

Experiment 1-7

The resin was purified in the same manner as Experiment 1-4 above, except pressurizing the interior of the container at 5kg/cm$^2$ (0.5MPa).

The above results are shown in Table 3.

Table 3

| | Cyclohexane (ppm) | Removal rate (%) | Appearance | Adhesion to inner wall of bottle |
|---|---|---|---|---|
| Before experiments | 10,600 | - | Fine powder | yes |
| Experiment 1-4 | 170 | 98.4 | Fine powder | no |
| Experiment 1-5 | 260 | 97.5 | Fine powder | no |

Table 3   (continued)

|  | Cyclohexane (ppm) | Removal rate (%) | Appearance | Adhesion to inner wall of bottle |
|---|---|---|---|---|
| Experiment 1-6 | 650 | 93.9 | Fine powder | no |
| Experiment 1-7 | 720 | 93.2 | Fine powder | no |

In Table 3, the residual amounts of cyclohexane in Experiments 1-4 through 1-7 were 170, 260, 650, and 720ppm, respectively, which are all less than 1,000ppm, and the powder changed little in appearance.

2. Purification of acrylate-based resin (2)

2-1. Purification of powdered resin (III)

Next, powdered resin that had been filtered out from a suspension containing an acrylate-based resin obtained in the same manner as 1-1 above was air-dried in the atmosphere at room temperature for 24 hours. The cyclohexane content in the dried specimen was 8,228ppm as measured by GC. The following Experiment 2-1 was conducted using this specimen.

Experiment 2-1

For the purpose of studying effects of the amount of water vapor generated from distilled water, 150, 250, 300 and 600mg of distilled water were deposited on the inner wall of the container separately for a 2g specimen placed in the container using the apparatus in Experiment 1-1 above. The interior of the container was then replaced with carbon dioxide gas, and the container was sealed. The interior of the container was then pressurized at 0.4MPa, and the container was subsequently heated to 70°C and kept at this temperature for 1 hour.
After the process had been completed, the powdered resin remaining in the container was used as a measurement specimen, and cyclohexane was quantitatively analyzed.
The above results are shown in Table 4.

Table 4

| Added amount (mg) | Cyclohexane (ppm) | Removal rate (%) |
|---|---|---|
| Before Experiments | 8,228 | - |
| 150 | 7,099 | 13.7 |
| 250 | 2,056 | 75.0 |
| 300 | 2,157 | 73.8 |
| 600 | 1,346 | 83.6 |

It is clear from Table 4 that the removal rate of cyclohexane increases with greater amounts of water vapor.

Experiment 2-2

For the purpose of studying effects of the heating temperature under pressurizing, 250mg of distilled water was deposited for a 2g specimen, the interior of the container was pressurized at 0.4MPa, the heating temperature was set to 70°C and 80°C, and the container was kept in this state for 1 hour. After the process had been completed, cyclohexane was quantitatively analyzed in the same manner as Experiment 2-1 above.
The above results are shown in Table 5.

Table 5

| Temperature (°C) | Cyclohexane (ppm) | Removal rate (%) |
|---|---|---|
| Before Experiments | 8,228 | - |
| 70 | 2,157 | 73.8 |
| 80 | 2,206 | 73.2 |

In Table 5, the removal rate of cyclohexane exceeded 70% at heating temperatures of 70°C and 80°C.

Next, the powdered resin that had been filtered out from the suspension obtained in 2-1 above was air-dried, and cyclohexane content of the dried specimen was measured and found to be 8,558ppm. The following Experiment 2-3 was conducted using this specimen.

Experiment 2-3

For the purpose of studying effects of the pressure in the container, 250mg of distilled water was deposited on the inner wall of the container with a 2g specimen, the interior of the container was pressurized at 0, 0.2, 0.4, and 0.8MPa, and the container was heated to 70°C and kept at this temperature for 1 hour. Then cyclohexane was quantitatively analyzed in the same manner as Experiment 2-1 above.

The above results are shown in Table 6.

Table 6

| Pressure (MPa) | Cyclohexane (ppm) | Removal rate % |
|---|---|---|
| Before Experiments | 8,558 | - |
| 0 | 2,616 | 69.4 |
| 0.2 | 2,441 | 71.5 |
| 0.4 | 2,157 | 74.8 |
| 0.8 | 2,204 | 74.2 |

It is clear from Table 6 that the removal rate of cyclohexane tends to be higher under pressurizing than under atmospheric pressure in the interior of the container.

Experiment 2-4

For the purpose of studying effects of the heating temperature under pressurizing, 300mg of distilled water was deposited for a 2g specimen, the interior of the container was pressurized at 0.4MPa, the heating temperature was set to 70°C, and the container was kept in this state for 30, 60 and 90 minutes. After the process had been completed, cyclohexane was quantitatively analyzed in the same manner as Experiment 2-1 above.

The above results are shown in Table 7.

Table 7

| Time (minutes) | Cyclohexane (ppm) | Removal rate (%) |
|---|---|---|
| Before Experiments | 8,558 | - |
| 30 | 2,388 | 72.1 |
| 60 | 2,157 | 74.8 |
| 90 | 719 | 91.6 |

It is clear from Table 7 that the removal rate of cyclohexane exceeded 70% even when the heating time was 30 minutes, and the removal rate further increased as the time to treat.

3. Purification of acrylate-based resin (3)

The following experiments were conducted using a powdered resin having a cyclohexane content of 8,228ppm.

3-1. Purification of powdered resin (IV)

Experiment 3-1

Using the same apparatus as in Experiment 1-1 above, a 10g specimen was placed in a 2,840mL container, and 0.0278mol of methanol was deposited on the inner wall of the container. After that, the interior of the container was replaced with nitrogen gas, and the container was sealed. The container was subsequently heated to 80°C under atmospheric pressure without pressurizing the interior of the container, and kept in this state for 1 hour.

After the process had been completed, cyclohexane was quantitatively analyzed in the same manner as described above. The result is shown in Table 8. Further, the specimen was taken out of the container and the appearance of the powder had a moist feel and satisfactory quality.

Experiment 3-2

The resin was purified in the same manner as Experiment 3-1 above, except using ethanol in Experiment 3-1 instead of methanol in Experiment 3-1. The powder had a moist feel and satisfactory quality when examined following completion of the process.

Experiment 3-3

The resin was purified in the same manner as Experiment 3-1 above, except using 1-propanol in Experiment 3-1 instead of methanol in Experiment 3-1. The powder had a moist feel and satisfactory quality when examined following completion of the process.

Experiment 3-4

The resin was purified in the same manner as Experiment 3-1 above, except using 2-propanol in Experiment 3-1 instead of methanol in Experiment 3-1. The powder had a moist feel and satisfactory quality when examined following completion of the process.

Experiment 3-5

The resin was purified in the same manner as Experiment 3-1 above, except using ethyl acetate in Experiment 3-1 instead of methanol in Experiment 3-1. The powder had a moist feel and satisfactory quality when examined following completion of the process.

Experiment 3-6

The resin was purified in the same manner as Experiment 3-1 above, except using acetone in Experiment 3-1 instead of methanol in Experiment 3-1. The powder had a moist feel and satisfactory quality when examined following completion of the process.

Experiment 3-7

The resin was purified in the same manner as Experiment 3-1 above, except using methyl ethyl ketone in Experiment 3-1 instead of methanol in Experiment 3-1. The powder had a moist feel and satisfactory quality when examined following completion of the process.

These results are shown in Table 8.

Table 8

|  | Additive | Cyclohexane (ppm) | Removal rate (%) |
|---|---|---|---|
| Before Experiments | - | 8,228 | - |
| Experiment 3-1 | Methanol | 3,091 | 62.4 |
| Experiment 3-2 | Ethanol | 2,367 | 71.2 |
| Experiment 3-3 | 1-Propanol | 716 | 91.3 |
| Experiment 3-4 | 2-Propanol | 3,545 | 56.9 |
| Experiment 3-5 | Ethyl acetate | 7,043 | 14.4 |
| Experiment 3-6 | Acetone | 6,520 | 20.8 |
| Experiment 3-7 | Methyl ethyl ketone | 6,630 | 19.4 |

As is clear from Table 8, among these polar solvents, 1-propanol in particular exhibits a high removal rate of 91.3%.

3-2. Purification of powdered resin (V)

In Experiment 3-2 above, the specimen was purified using ethanol vapor at a heating temperature of 80°C and a heating time of 1 hour. Following Experiment 3-8 was conducted varying these conditions.

Experiment 3-8

The resin was purified in the same manner as Experiment 3-2 above, except heating time was 5 hours. The powder had a moist feel and satisfactory quality when examined following completion of the process.

Experiment 3-9

The resin was purified in the same manner as Experiment 3-2 above, except heating time was 8 hours. The powder had a moist feel and satisfactory quality when examined following completion of the process.

Experiment 3-10

The resin was purified in the same manner as Experiment 3-2 above, except heating temperature was 90°C. The powder had a moist feel and satisfactory quality when examined following completion of the process.

Experiment 3-11

The pressure in Experiment 3-10 was further reduced (degree of vacuum: 10kPa. abs), and the specimen was dried for one hour. The powder had a moist feel and satisfactory quality when examined following completion of the process.

Experiment 3-12

The resin was purified in the same manner as Experiment 3-10 above, except heating time was 5 hours. The powder had a moist feel and satisfactory quality when examined following completion of the process.

Experiment 3-13

The resin was purified in the same manner as Experiment 3-10 above, except using ethanol where 20 mol% of water was added to. The powder had a moist feel and satisfactory quality when examined following completion of the process.

These results are shown in Table 9.

Table 9

|  | Adding ethanol | Cyclohexane (ppm) | Removal rate (%) |
|---|---|---|---|
| Before experiments | - | 8,228 | - |
| Experiment 3-2 | 80°C, 1 hour | 2,367 | 71.2 |
| Experiment 3-8 | 80°C, 5 hours | 347 | 95.8 |
| Experiment 3-9 | 80°C, 8 hours | 233 | 97.2 |
| Experiment 3-10 | 90°C, 1 hour | 743 | 91.0 |
| Experiment 3-11 | reduced pressure and dried | 318 | 96.1 |
| Experiment 3-12 | 90°C, 5 hours | 259 | 96.9 |
| Experiment 3-13 | ethanol + water 90°C, 1 hour | 213 | 97.4 |

From the results of Experiments 3-8 and 3-9 in Table 9, it is found that, when the heating temperature was 80°C, the longer the heating time, the higher the removal rate of cyclohexane significantly. And the removal rate in Experiment 3-9 wherein the heating time was 8 hours was 97.2%.

In addition, when the heating temperature was 90°C, heating for 1 hour yielded an excellent removal rate of 91% (Experiment 3-10). When the heating was for 5 hours, the removal rate increased to about 97% (Experiment 3-12), but after heating for 1 hour, the removal rate increased from 91% to 96% (Experiment 3-11) even with vacuum heating for 1 hour. In Experiment 3-13, in which ethanol and water were both used, an extremely high removal rate of 97.4% was achieved after heating for 1 hour at 90°C.

Experiment 3-14

The resin was purified in the same manner as Experiment 3-3 above, except heating temperature was 90°C. The powder had a moist feel and satisfactory quality when examined following completion of the process.
These results are shown in Table 10.

Table 10

|  | Adding 1-propanol | Cyclohexane (ppm) | Removal rate (%) |
|---|---|---|---|
| Before experiments | - | 8,228 | - |
| Experiment 3-3 | 80°C, 1 hour | 716 | 91.3 |
| Experiment 3-14 | 90°C, 1 hour | < 100 | > 98 |

From the results in Table 10, Experiment 3-14 in which the heating temperature was 90°C, being higher, exhibited a higher removal rate of cyclohexane than Experiment 3-3, wherein the heating temperature was 80°C. It is found that 1-propanol is particularly effective among alcohols.

4. Purification of acrylate-based resin (4)

4-1. Purification of powdered resin (VI)

Powdered resin that had been filtered out from a suspension containing an acrylate-based resin obtained in the same manner as 1-1 above was air-dried in the atmosphere at room temperature for 24 hours. The cyclohexane content in the dried specimen was 8,228ppm as measured by GC.

Experiment 4-1

A rotary evaporator equipped with a 1L flask (NE-1001 VG made by EYELA) was used and a 20g specimen was placed in the flask. Then temperature of the oil bath was adjusted to about 105°C so that the temperature in the flask reached 100°C, and water vapor was introduced into the rotating flask and the powdered resin was purified. The amount of water vapor introduced was 5.0mg per minute, and the treatment time was 2.5 hours. This experiment was conducted without evacuating. The results are shown in Table 11.

Experiment 4-2

The resin was purified in the same manner as Experiment 4-1 above, except the amount of water vapor introduced was 2.0mg per minute and the treatment time was 6 hours. The results are shown in Table 11.

Table 11

|  | Before experiments | Experiment 4-1 | Experiment 4-2 |
|---|---|---|---|
| Specimen weight (g) |  | 20 | 20 |
| Amount of water vapor introduced (mg/min) |  | 5.0 | 2.0 |
| Amount of N$_2$ gas introduced (mL/min) |  | 0 | 0 |
| Temperature (°C) |  | 100 | 100 |
| Pressure |  | atmospheric pressure | atmospheric pressure |
| Treatment time (hours) |  | 2.5 | 6 |

Table 11   (continued)

|  | Before experiments | Experiment 4-1 | Experiment 4-2 |
| --- | --- | --- | --- |
| Cyclohexane (ppm) | 8,228 | 828 | 1,197 |
| Removal rate (%) | - | 89.9 | 85.5 |

It can be seen from Table 11 that increasing the amount of water vapor made it possible to shorten the treatment time and to improve the removal rate of cyclohexane as in Experiment 4-1. The condition of the powder was also satisfactory.

Experiment 4-3

The resin was purified in the same manner as Experiment 4-1 above, except ethanol vapor of 6.5μL (5.1mg) every minute was introduced instead of water vapor and the treatment time was 8 hours. The results are shown in Table 12. For the cyclohexane content in Table 12, the values before and after treating are both listed.

Experiment 4-4

The resin was purified in the same manner as Experiment 4-1 above, except a specimen having a weight of 100g was used, 1-propanol vapor of 10μL (8.0mg) every minute was introduced instead of water vapor, nitrogen gas of 20mL per minute was introduced and the treatment time was 7 hours. The results are shown in Table 12.
From the results in Table 12, Experiment 4-3 using ethanol vapor is one where nitrogen gas as another gas component was not introduced, the cyclohexane content was 262ppm and the purified powder was slightly soft and clumpy, but excellent results were still obtained.
In addition, Experiment 4-4 using 1-propanol had the cyclohexane content less than 100ppm, and it is clear that the removal rate of cyclohexane was higher. The purified powder was loose, and the presence of soft clumps was noted, but results were unusually excellent.

Table 12

| | Experiments | | |
|---|---|---|---|
| | 4-2 | 4-3 | 4-4 |
| Specimen weight (g) | 20 | 20 | 100 |
| Substance introduced | water vapor | ethanol vapor | 1-propanol vapor |
| Amount introduced (mg/min) | 2.0 | 5.1 | 8.0 |
| Amount of $N_2$ gas introduced (mL/min) | 0 | 0 | 20 |
| Temperature (°C) | 100 | 100 | 100 |
| Pressure | atmospheric pressure | atmospheric pressure | atmospheric pressure |
| Treatment time (hours) | 6 | 8 | 7 |
| Amount of cyclohexane (after treatment/before treatment) (ppm) | 1,197/8,228 | 262/8,228 | 100 or less/6,858 |
| Removal rate of cyclohexane (%) | 85.5 | 96.8 | > 98.5 |

4-2. Purification of powdered resin (VII)

Experiment 5-1

A 500g specimen was placed into a Lodige mixer equipped with a 5L drum container, the jacket temperature was adjusted to about 105°C so that the temperature of the interior of the container reached 100°C, and water vapor and nitrogen gas were introduced into the rotating container, whereby the powdered resin was purified. The amount of water vapor introduced was 50mg per minute, the amount of nitrogen gas introduced was 110mL per minute, and the treatment time was 7 hours. The experiment was conducted without evacuating. The results are shown in Table 13.

Experiment 5-2

The resin was purified in the same manner as Experiment 5-1 above, except the amount of nitrogen gas introduced was 140mL per minute. The results are also shown in Table 13.

Experiment 5-3

The resin was purified in the same manner as Experiment 5-1 above, except the amount of nitrogen gas introduced was 200mL per minute. The results are also shown in Table 13.

Experiment 5-4

The resin was purified in the same manner as Experiment 5-3 above, except the amount of water vapor introduced was 90mg per minute and the treatment time was 5 hours. The results are also shown in Table 13.
From the results in Table 13, the purified powders were relatively satisfactory in Experiments 5-1 to 5-3.

Table 13

| | Experiments | | | |
|---|---|---|---|---|
| | 5-1 | 5-2 | 5-3 | 5-4 |
| Specimen weight (g) | 500 | 500 | 500 | 500 |
| Amount of water vapor introduced (mg/min) | 50 | 50 | 50 | 90 |
| Amount of $N_2$ gas introduced (mL/min) | 110 | 140 | 200 | 200 |
| Temperature (°C) | 100 | 100 | 100 | 100 |
| Pressure | atmospheric pressure | atmospheric pressure | atmospheric pressure | atmospheric pressure |
| Treatment time (hours) | 7 | 7 | 7 | 5 |
| Amount of cyclohexane (after treatment /before treatment) (ppm) | 1,720/6,770 | 1,350/6,690 | 2,240/6,310 | 1,430/6,640 |
| Removal rate of cyclohexane (%) | 74.6 | 79.8 | 64.5 | 78.5 |

Experiment 5-5

The resin was purified in the same manner as Experiment 5-1 above, except a specimen having a weight of 500g was used, 1-propanol vapor of 104μl (83mg) every minute was introduced instead of water vapor and nitrogen gas of 100mL per minute was introduced. The results are shown in Table 14.

Experiment 5-6

The resin was purified in the same manner as Experiment 5-5 above, except the amount of 1-propanol vapor introduced was 156μL (125mg) per minute, and the amount of nitrogen gas introduced was 150mL per minute.

Experiment 5-7

The resin was purified in the same manner as Experiment 5-6 above, except the amount of 1-propanol vapor introduced was 208μL (166mg) per minute, and the amount of nitrogen gas introduced was 200mL per minute.

Experiment 5-8

The resin was purified in the same manner as Experiment 5-5 above, except a specimen having a weight of 710g was used, 1-propanol vapor of 148μL (118mg) every minute was introduced instead of water vapor and nitrogen gas of 142mL per minute was introduced. The results are shown in Table 14.

In Table 14, Experiment 5-5 is an example wherein 1-propanol vapor is used, and it was possible to reduce the cyclohexane content to 1,000ppm or less despite the fact that a 500g specimen had been treated. The purified powders according to Experiments 5-5 to 5-8 were not clumpy, but fluffy and very excellent.

Table 14

| | Experiments | | | |
|---|---|---|---|---|
| | 5-5 | 5-6 | 5-7 | 5-8 |
| Specimen weight (g) | 500 | 500 | 500 | 710 |
| Substance introduced | 1-propanol vapor | | | |
| Amount introduced (mg/min) | 83 | 125 | 166 | 118 |
| Amount of $N_2$ gas introduced (mL/min) | 100 | 150 | 200 | 142 |
| Temperature (°C) | 100 | 100 | 100 | 100 |
| Pressure | atmospheric pressure | atmospheric pressure | atmospheric pressure | atmospheric pressure |
| Treatment time (hours) | 7 | 7 | 7 | 7 |
| Amount of cyclohexane (after treatment /before treatment) (ppm) | 960/7,310 | 970/6,370 | 550/6,510 | 1,960/6,510 |
| Removal rate of cyclohexane (%) | 86.9 | 84.8 | 91.6 | 69.9 |

4-3. Purification of powdered resin (VIII)

Experiment 6

Powdered resin that had been filtered out from a suspension containing an acrylate-based resin obtained in the same manner as 1-1 above was air-dried in the atmosphere at room temperature and at relative humidity of 50% for 24 hours. The cyclohexane content in the air-dried specimen was 6,300ppm as measured by GC, and the hygroscopicity was 3.5% by mass.

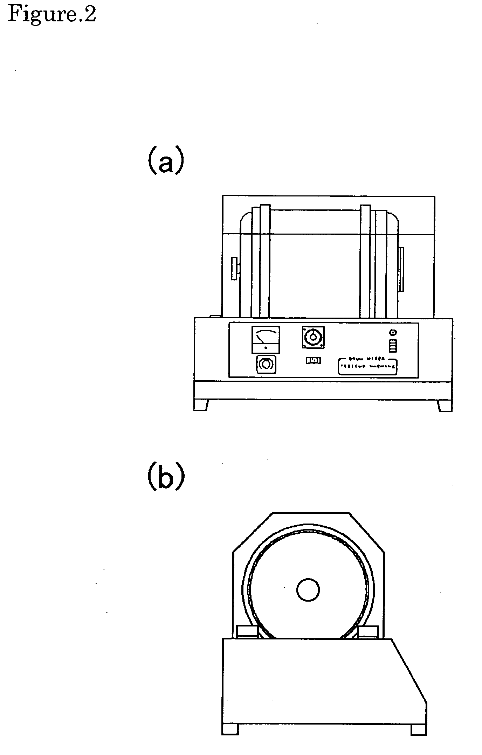

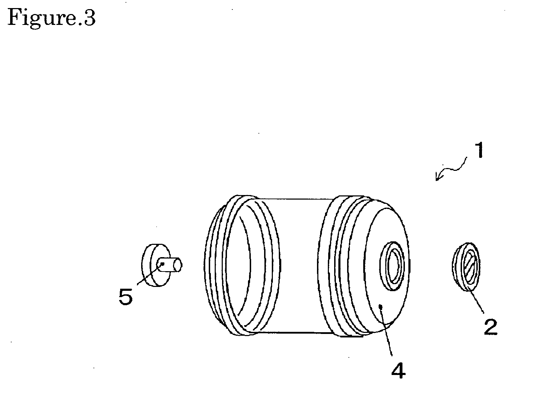

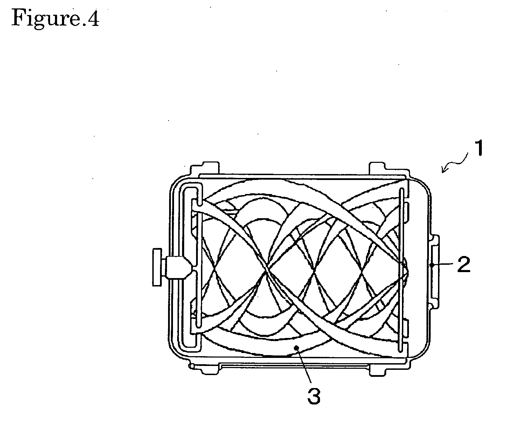

500g of this air-dried specimen was packed into the drum (Figs.3 and 4) of a 5L drum mixer (Fig.2), the drum was sealed, the air-dried specimen was then heated by a heater from the outside while being rotated, and the interior of the drum was kept at 100°C for 4 hours.

When the specimen was taken out of the drum upon completion of the process, the purified powder was found to be exactly the same as before heating. The cyclohexane content was 3,000ppm as measured by GC.

4-4. Purification of powdered resin (IX)

Experiment 7

The powder was heated in the same manner as Experiment 6 except the heating temperature was varied within a range between 105°C and 120°C. When the specimen was taken out of the drum upon completion of the process, the purified powder was found to be exactly the same as before heating. The cyclohexane contents as measured by GC were as follows.

Heating temperature 105°C: 3,300ppm
Heating temperature 110°C: 860ppm
Heating temperature 120°C: 750ppm

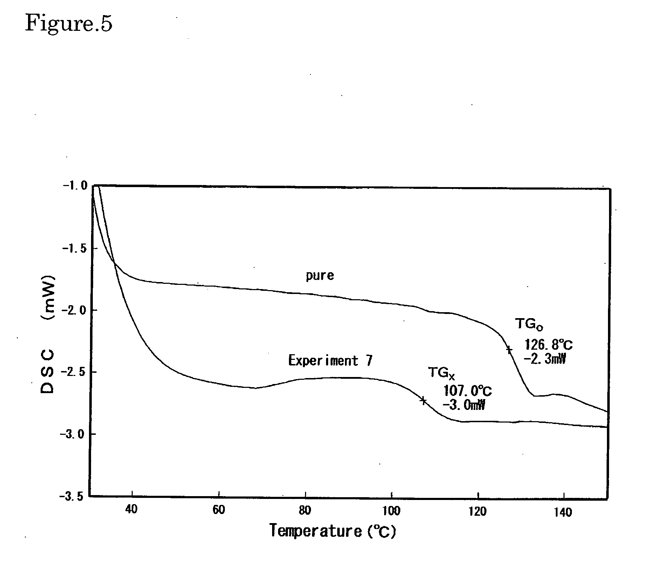

As shown above, when the heating temperature is equal to or higher than 110°C, the cyclohexane content is markedly reduced. On the other hand, the temperature $TG_X$ of the specimen obtained by packing an unheated powder in a sealed container was found to be 107°C as a result of differential scanning calorimetric analysis (see Fig.5).

5. Manufacturing and purifying acrylate-based resin

5-1. Method for manufacturing acrylate-based resin

A powdered acrylate-based resin was obtained in the same manner as 1-1 above, except 2,200 parts by mass of benzene were used instead of 2,680 parts by mass of cyclohexane in the method for manufacturing an acrylate-based resin described in 1-1 above.

5-2. Purification of powdered resin (X)

The amount of benzene incorporated into the powdered acrylate-based resin obtained by the aforementioned method was found to be 4,370ppm as measured by GC. The following experiment was conducted using this specimen.

Experiment 8

A 3kg specimen was placed into a 20L horizontal dryer, the pressure of vapor for heating was adjusted so that the temperature of the interior of the heating jacket reached 105°C, and 1-propanol vapor and nitrogen gas were introduced into the rotating dryer and were treated for 4 hours without evacuating, whereby the powdered resin was purified. The amount of 1-propanol vapor introduced was 938μL (750mg) per minute, and the amount of nitrogen gas introduced was 900mL per minute.

When the specimen was taken out of the dryer upon completion of the process, the purified powder had a moist feel and satisfactory quality. The benzene content was 430ppm as measured by GC, and the removal rate was 90.2%.

Effect of the Invention

According to the method for purifying a powdered resin of the present invention, purification can be performed while a satisfactory powdery state is maintained. Providing step (A) of bringing a gas comprising polar solvent vapor into contact with a powdered resin and step (B) of heating the powdered resin makes it possible to efficiently extract and remove the residual organic solvent. In the case the resin is a (co)polymer in which acrylic acid is a constituent monomer, the content of the residual organic solvent can be at 1,000ppm or less.

In the case the solubility parameter $\delta$ of the polar solvent is 15MPa$^{1/2}$ or more, the content of the residual organic solvent can be at 3,000ppm or less, preferably 1,000ppm or less and more preferably 500ppm or less.

Since the purified powdered resin has antistatic properties, it can be easily handled without adhering to the inner wall of the container.

Industrial Applicability

Powdered resin purified using the purifying method of the present invention has little of the residual organic solvent used in the polymerization, and therefore has high purity and is suitable for cosmetics, medical supplies, toiletries and other products.

**Claims**

1. A method for purifying a powdered resin, comprising:

    step (A) of bringing a gas comprising polar solvent vapor into contact with a powdered resin obtained by precipitation polymerization of a hydrophilic monomer in an organic solvent that can dissolve said hydrophilic monomer and cannot dissolve a polymer composed of said hydrophilic monomer; and
    step (B) of heating said powdered resin.

2. The method for purifying a powdered resin according to Claim 1,
    wherein said organic solvent remaining in said powdered resin is extracted, and is removed along with said gas.

3. The method for purifying a powdered resin according to Claim 1,
    wherein said polar solvent vapor is obtained by gasifying 0.1 to 600mg of said polar solvent per 1g of said powdered resin to be treated.

4. The method for purifying a powdered resin according to Claim 1,
    wherein said polar solvent is a solvent having a solubility parameter $\delta$ of 15MPa$^{1/2}$ or more.

5. The method for purifying a powdered resin according to Claim 1,
    wherein contact time of said gas with said powdered resin in said step (A) is 0.1 hour or more.

6. The method for purifying a powdered resin according to Claim 1,
    wherein heating temperature in said step (B) is in the range from 50 to 200°C.

7. The method for purifying a powdered resin according to Claim 6,
    wherein said heating temperature in said step (B) is the temperature in the range from $TG_X$ to $TG_O$ that are specific to said powdered resin,
    wherein said $TG_X$ is 50°C or higher and is a temperature that corresponds to the inflection point of the endothermic peak displayed by said powdered resin brought into contact with said gas in a differential scanning calorimetric analysis, and
    wherein said $TG_O$ is 200°C or lower and is glass transition temperature of said powdered resin.

8. The method for purifying a powdered resin according to Claim 1,
    wherein heating temperature in said step (B) is a temperature equal to or higher than the boiling point of said polar solvent.

9. The method for purifying a powdered resin according to Claim 1,
    wherein said step (A) and/or said step (B) are performed at a pressure of 10MPa or lower.

10. The method for purifying a powdered resin according to Claim 1,

wherein said gas comprises an inert gas, and said inert gas is selected from the group consisting of carbon dioxide, nitrogen, air, helium, neon and argon.

**11.** The method for purifying a powdered resin according to Claim 1,
wherein said powdered resin is a (co)polymer in which acrylic acid is a constituent monomer.

Figure.1

Figure.2

(a)

(b)

Figure.3

Figure.4

Figure.5

## INTERNATIONAL SEARCH REPORT

| | International application No. |
|---|---|
| | PCT/JP2004/002240 |

**A. CLASSIFICATION OF SUBJECT MATTER**
Int.Cl⁷ C08F6/10

According to International Patent Classification (IPC) or to both national classification and IPC

**B. FIELDS SEARCHED**

Minimum documentation searched (classification system followed by classification symbols)
Int.Cl⁷ C08F6/10

Documentation searched other than minimum documentation to the extent that such documents are included in the fields searched

Electronic data base consulted during the international search (name of data base and, where practicable, search terms used)
WPI(L)

**C. DOCUMENTS CONSIDERED TO BE RELEVANT**

| Category* | Citation of document, with indication, where appropriate, of the relevant passages | Relevant to claim No. |
|---|---|---|
| X | JP 2002-121291 A (Nippon Shokubai Co., Ltd.), 23 April, 2002 (23.04.02), Claims; Par. Nos. [0050] to [0054]; Fig. 1 & EP 1130045 A2 & US 2001-0025093 A1 | 1-11 |
| A | JP 2001-523287 A1 (The Dow Chemical Co.), 20 November, 2001 (20.11.01), Claims; examples 1 to 3 & WO 98/49221 A1 & EP 979250 A & US 6323252 B1 | 1-11 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 29 June, 2004 (29.06.04) | 27 July, 2004 (27.07.04) |

| Name and mailing address of the ISA/ | Authorized officer |
|---|---|
| Japanese Patent Office | |
| Facsimile No. | Telephone No. |

Form PCT/ISA/210 (second sheet) (January 2004)